# EUROPÄISCHE PATENTSCHRIFT

(11) **EP 4 185 889 B1**
(45) Veröffentlichungstag und Bekanntmachung des Hinweises auf die Patenterteilung: **01.04.2026**
(21) Anmeldenummer: 21755379.1
(22) Anmeldetag: 23.07.2021
(51) Int. Cl.: G01S 7/484, F41H 13/00, G01S 17/10, G01S 17/66

(54) **VERFAHREN UND VORRICHTUNGEN ZUR REDUZIERUNG VON AUGENSICHERHEITSMINDESTABSTÄNDEN IN VERBINDUNG MIT BELEUCHTUNGSLASERSTRAHLUNG**
METHODS AND DEVICES FOR REDUCING EYE SAFETY MINIMUM DISTANCES IN CONJUNCTION WITH ILLUMINATION LASER RADIATION
PROCÉDÉS ET DISPOSITIFS POUR RÉDUIRE DES DISTANCES OCULAIRES CRITIQUES NOMINALES EN LIEN AVEC UN RAYONNEMENT DE LASER D'ÉCLAIRAGE

(30) Priorität: 24.07.2020 DE 102020119620
(43) Veröffentlichungstag der Anmeldung: 31.05.2023
(73) Patentinhaber: Rheinmetall Waffe Munition GmbH, 29345 Südheide (DE)
(72) Erfinder: JUNG, Markus, 76676 Graben-Neudorf (DE); BAUMGÄRTEL, Thomas, 29229 Celle (DE); LUDEWIGT, Klaus, 21033 Hamburg (DE); SCHMITZ, Jürgen, 38518 Gifhorn (DE)
(74) Vertreter: DREISS Patentanwälte PartG mbB
(86) Internationale Anmeldenummer: PCT/EP2021/070625
(87) Internationale Veröffentlichungsnummer: WO 2022/018238

(56) Entgegenhaltungen:
- DE-A1- 4 444 637
- US-A- 3 946 233
- US-A- 5 837 996
- US-A1- 2005 185 403
- US-A1- 2013 016 514

## Beschreibung

Die vorliegende Erfindung betrifft Verfahren und Vorrichtungen zur Reduzierung von Augensicherheitsmindestabständen bei der aktiven Beobachtung von Objekten und beim Feintracking mittels Beleuchtungslaserstrahlung. Der Augensicherheitsmindestabstand wird auch als non ocular hazard distance, abgekürzt NOHD, bezeichnet. Er stellt die Entfernung einer Person von einer Laserstrahlungsquelle dar, bei der die auf die Person fallende Laserstrahlung unter einen vorgegebenen Expositionsgrenzwert EGW fällt.

Zur Beleuchtung eines Objektes in einer definierten Umgebung muss eine Mindestbeleuchtungsintensität auf dem Objekt erreicht werden, damit ein optischer Sensor, der vom Objekt reflektierte Beleuchtungsstrahlung erfasst, ausreichend viele Photonen für eine Auswertung der reflektierten Beleuchtungsstrahlung erhält.

Bei einem ersten per se bekannten Verfahren zum Betreiben einer Laserstrahlungsvorrichtung, die einen Beleuchtungslaser und einen Wirklaser aufweist, wird der Beleuchtungslaser in einem ersten Betriebsmodus der Laserstrahlungsvorrichtung, in dem der Wirklaser keine Wirklaserstrahlung abstrahlt, so betrieben, dass seine Beleuchtungslaserstrahlung eine erste Beleuchtungslaserstrahlungsleistung aufweist.

Eine solches Verfahren ist aus US 5 837 996 A bekannt.

In einer Laserstrahlungsvorrichtung, die einen ersten Beleuchtungslaserstrahlengang und einen zweiten Beleuchtungslaserstrahlengang aufweist, wobei in dem ersten Beleuchtungslaserstrahlengang propagierende Laserstrahlung aus einer ersten Apertur der Laserstrahlungsvorrichtung austritt und in dem zweiten Beleuchtungslaserstrahlengang propagierende Laserstrahlung aus einer zweiten Apertur der Laserstrahlungsvorrichtung austritt, die von der ersten Apertur räumlich getrennt ist, überlappen sich die Beleuchtungslaserstrahlengänge.

Bei einem zweiten per se bekannten Verfahren zum Einstellen einer Beleuchtungslaserstrahlungsleistung wird eine Entfernung eines durch den Beleuchtungslaser zu beleuchtenden Ziels mit einer vom Beleuchtungslaser verschiedenen Entfernungsmessvorrichtung gemessen.

Ein drittes per se bekanntes Verfahren dient zum Einstellen von Parametern eines Beleuchtungslasers und weist folgende Schritte auf: Messen einer Entfernung eines durch den Beleuchtungslaser zu beleuchtenden Ziels, Bestimmen von Parametern des Beleuchtungslasers in Abhängigkeit von der gemessenen Entfernung, Aussenden von wenigstens einem auf das Ziel gerichteten Laserstrahlungspuls des mit den bestimmten Parametern betriebenen Beleuchtungslasers, Prüfen, ob Laserstrahlung des ausgesendeten Laserstrahlungspulses zu einem Detektor des Beleuchtungslasers reflektiert wird und dann, wenn das der Fall ist, Bestimmen der Entfernung des Objektes, das den Laserpuls reflektiert hat, in Abhängigkeit von der reflektierten und detektierten Laserstrahlung.

Für den Beleuchtungslaser ist es aus einer Vielzahl von Gründen (Querschnittsfläche, Reinigung, Signatur, etc.) wünschenswert, eine möglichst kleine Sendeapertur zu haben. Dies kann besonders in der Nähe der Apertur zu hohen Intensitäten und damit zu unerwünscht großen NOHD Werten führen.

Für das aktive Beobachten von Objekten im Raum auf unterschiedlichen Entfernungen ist es besonders im urbanen Einsatz wünschenswert, niedrige NOHD Werte für den Einsatz des Beleuchtungslasers zu erzielen, um sicherheitsbedingte Beschränkungen bei der Beleuchtung vermeiden zu können.

Um in diesem Zielkonflikt niedrige NOHD Werte zu erreichen, werden zur Zeit Sendeaperturen für die Beleuchtungslaserstrahlung verwendet, die ähnlich groß sind wie Sendeaperturen von wesentlich größere Leistungen abstrahlenden Wirklasern. Eine weitere Möglichkeit besteht darin, die von einem Beleuchtungslaser abgestrahlte Leistung auf einen für die Beleuchtungsfunktion gerade noch ausreichenden Mindestwert zu beschränken. Bekannt ist auch eine Verwendung von Beleuchtungslaserstrahlung mit sogenannten "augensicheren Wellenlängen", die mit hohen Expositionsgrenzwerten einhergehen (Der Expositionsgrenzwert steigt mit zunehmender Wellenlänge an).

Die Beschränkung der Beleuchtungslaserstrahlungsleistung ist grundsätzlich nachteilig, weil sie die Beleuchtungsqualität und damit die Objekterkennungsqualität und Auflösung direkt verringert. Beleuchtungslaser, die sogenannte augensichere Beleuchtungslaserstrahlung emittieren, sind sehr teuer und weisen eine geringe Effizienz auf.

Vor diesem Hintergrund besteht die Aufgabe der Erfindung in der Angabe von Verfahren zum Betreiben von Beleuchtungslasern mit sehr niedrigen NOHD Werten, die einen Einsatz von Beleuchtungslasern in einer urbanen Umgebung unter Einhaltung von Expositionsgrenzwerten auch bei nicht grundsätzlich bereits als "augensicher" betrachteten Beleuchtungslaserstrahlungswellenlängen erlauben. Eine weitere Aufgabe besteht darin, eine Vorrichtung anzugeben, die den Einsatz von Beleuchtungslasern in einer urbanen Umgebung unter Einhaltung von Expositionsgrenzwerten erlaubt. Der Einsatz soll insbesondere auch mit Beleuchtungslaserstrahlungswellenlängen möglich sein, die nicht von vornherein bereits als "augensicher" gelten. Diese Aufgabe wird jeweils mit der Summe der Merkmale jedes unabhängigen Anspruchs gelöst.

Das oben genannte erste Verfahren zeichnet sich erfindungsgemäß dadurch aus, dass der Beleuchtungslaser in einem zweiten Betriebsmodus der Laserstrahlungsvorrichtung, in dem der Wirklaser Wirklaserstrahlung emittiert, so betrieben wird, dass seine Beleuchtungslaserstrahlung eine zweite Beleuchtungslaserstrahlungsleistung aufweist, die größer ist als die erste Beleuchtungslaserstrahlungsleistung.

Die oben genannte Laserstrahlungsvorrichtung, die nicht erfindungsgemäß ist, zeichnet sich aus, dass eine Überlappung der beiden Beleuchtungslaserstrahlengänge erst in einem Abstand von den Aperturen auftritt, der größer als ein vorgegebener Mindestabstand für jeden einzelnen der beiden Strahlengänge ist.

Das zweite oben genannte Verfahren, das nicht erfindungsgemäß ist, zeichnet sich dadurch aus, dass eine Beleuchtungslaserstrahlungsleistung des Beleuchtungslasers in Abhängigkeit von der gemessenen Entfernung bestimmt wird und dass das Ziel anschließend durch den Beleuchtungslaser beleuchtet wird, wobei der Beleuchtungslaser so betrieben wird, dass er die bestimmte Beleuchtungslaserstrahlungsleistung emittiert.

Das oben genannte dritte Verfahren, das nicht erfindungsgemäß ist, zeichnet sich dadurch aus, dass die Entfernung des Objektes mit der Entfernung des Ziels verglichen wird und dass dann, wenn die Entfernung des Objektes kleiner ist als die Entfernung des Ziels, Parameter des Beleuchtungslasers so verändert werden, dass ein Expositionsgrenzwert am Ort des Objektes durch die dort auftreffende Laserstrahlung des Beleuchtungslasers nicht überschritten wird.

Eine bevorzugte Ausgestaltung des ersten Verfahrens zeichnet sich dadurch aus, dass der Beleuchtungslaser in dem ersten Betriebsmodus und in dem zweiten Betriebsmodus so betrieben wird, dass er die Beleuchtungslaserstrahlung in Form von Beleuchtungslaserstrahlungspulsen emittiert, wobei eine Repetitionsfrequenz, mit der die Beleuchtungslaserstrahlungspulse emittiert werden, in der ersten Betriebsart kleiner ist als in der zweiten Betriebsart.

Ein bevorzugtes Arbeitsverfahren der Laserstrahlungsvorrichtung zeichnet sich dadurch aus, dass diese so betrieben wird, dass die in den Beleuchtungslaserstrahlengängen propagierende Laserstrahlung in Form von Beleuchtungslaserstrahlungspulsen in die Beleuchtungslaserstrahlengänge eingespeist wird, wobei die Beleuchtungslaserstrahlungspulse von Beleuchtungslaserstrahlungspuls zu Beleuchtungslaserstrahlungspuls abwechselnd in den ersten Beleuchtungslaserstrahlengang und den zweiten Beleuchtungslaserstrahlengang eingespeist wird.

Eine bevorzugte Ausgestaltung des zweiten Verfahrens zeichnet sich dadurch aus, dass die Beleuchtungslaserstrahlungsleistung so bestimmt wird, dass sie mit abnehmender Entfernung ebenfalls abnimmt.

Eine bevorzugte Ausgestaltung des dritten Verfahrens zeichnet sich dadurch aus, dass die Entfernung des Ziels mit einer vom Beleuchtungslaser verschiedenen Entfernungsmessvorrichtung gemessen wird.

Bevorzugt ist auch, dass die am Ort des Objektes auftreffende Laserstrahlung durch Reduzierung einer mittleren Intensität der Laserstrahlung des Beleuchtungslasers verändert wird.

Weiter ist bevorzugt, dass die mittlere Intensität der Laserstrahlung durch Reduzierung einer Repetitionsrate des Beleuchtungslasers verändert wird.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
- Figur 1: eine Laserstrahlungsvorrichtung, mit der die erfindungsgemäßen Verfahren ausführbar sind;
- Figur 2: ein Ausführungsbeispiel eines ersten erfindungsgemäßen Verfahrens, mit dem der Beleuchtungslaser betrieben wird;
- Figur 3: ein Ausführungsbeispiel einer erfindungsgemäßen Laserstrahlungsvorrichtung;
- Figur 4: ein Ausführungsbeispiel eines zweiten, nicht erfindungsgemäßen Verfahrens; und
- Figur 5: ein Flussdiagramm als Ausführungsbeispiel des dritten, nicht erfindungsgemäßen Verfahrens zum Einstellen von Parametern eines Beleuchtungslasers.

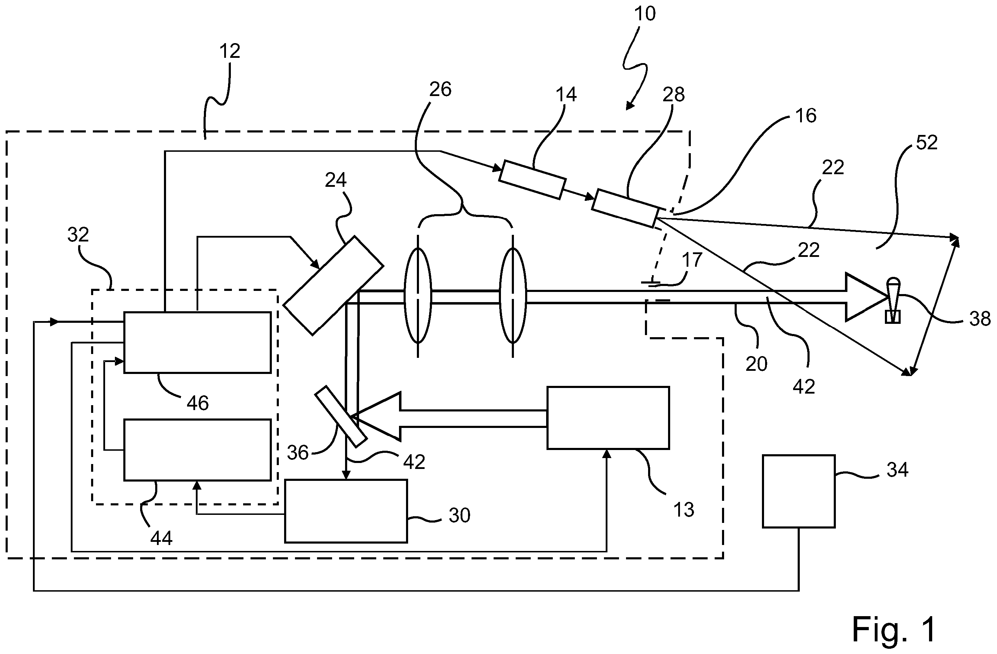

Im Einzelnen zeigt die Figur 1 eine Laserstrahlungsvorrichtung 10, die ein Gehäuse 12 aufweist. Das Gehäuse 12 weist eine erste Beleuchtungslaserapertur 16 auf, durch die hindurch Beleuchtungslaserstrahlung 22 in einem ersten Beleuchtungslaserstrahlengang 52 aus dem Gehäuse 12 heraustreten kann. Das Gehäuse 12 weist darüber hinaus eine Wirklaserapertur 17 auf, durch die hindurch ein Wirklaserstrahl aus dem Gehäuse 12 heraustreten kann

Die Laserstrahlungsvorrichtung 10 weist einen Wirklaser 13, einen ersten Beleuchtungslaser 14, einen Umlenkspiegel 36, der für die Wellenlänge der Wirklaserstrahlung 20 reflektierend und für die Wellenlänge der Beleuchtungslaserstrahlung 22 durchlässig ist, einen hinsichtlich seiner Orientierung im Raum steuerbaren Tip Tilt Spiegel 24, ein Wirklaserteleskop 26, ein erstes Beleuchtungslaserteleskop 28, einen optischen Sensor 30, ein Steuergerät 32 und eine Entfernungsmessvorrichtung 34 auf.

Die Beleuchtungslaserstrahlung 22 besitzt bevorzugt eine andere Wellenlänge als die Wirklaserstrahlung 20.

Der erste Beleuchtungslaser 14 ist bevorzugt dazu eingerichtet, pulsförmige Beleuchtungslaserstrahlung als Beleuchtungslaserstrahlung 22 zu erzeugen. Alternativ ist der erste Beleuchtungslaser 14 dazu eingerichtet, die Beleuchtungslaserstrahlung 22 als eine continuous wave Laserstrahlung zu erzeugen.

Die Beleuchtungslaserstrahlung 22 tritt durch die erste Beleuchtungslaserapertur 16 aus dem Gehäuse 12 aus und erfasst bei korrekter Grobausrichtung der Laserstrahlungsvorrichtung 10 ein Ziel 38.

Eine Grobausrichtung erfolgt zum Beispiel durch eine mechanische Richtvorrichtung, die dazu eingerichtet ist, das Gehäuse 12 und damit auch die aus dem Gehäuse 12 austretende Laserstrahlung 20, 22 in Azimut und Elevation grob auf das Ziel 38 auszurichten. Die grobe Ausrichtung wird zum Beispiel durch ein Radarsystem gesteuert, das in einer Ausgestaltung auch als Entfernungsmessvorrichtung 34 dient.

Vom Ziel 38 reflektierte Beleuchtungslaserstrahlung 42 propagiert durch das Wirklaserstrahlungsteleskop 26 hindurch und über den Tip-Tilt-Spiegel 24 zu dem Umlenkspiegel 36, der für die Wellenlänge der Wirklaserstrahlung 20 reflektierend und für die Wellenlänge der Beleuchtungslaserstrahlung 22 und der reflektierten Beleuchtungslaserstrahlung 42 durchlässig ist. Die reflektierte Beleuchtungslaserstrahlung 42 tritt durch den Umlenkspiegel 36 hindurch und wird von dem optischen Sensor 30 erfasst. Das dadurch erzeugte Signal des optischen Sensors 30 wird durch Auswertungssoftware 44 des Steuergeräts 32 ausgewertet, und das Ergebnis der Auswertung wird von einer Ansteuereinheit 46 des Steuergeräts 32 zu einer Ansteuerung des Tip Tilt Spiegels 24 verwendet. Die Ansteuerung erfolgt so, dass der Tip Tilt Spiegel 24 ggf. ausgelöste Wirklaserstrahlung 20 auf das Ziel 38 ausrichtet. Diese Ausrichtung stellt ein Feintracking dar.

Die Ansteuereinheit 46 steuert auch den ersten Beleuchtungslaser 14 und den Wirklaser 13 und verarbeitet dabei Signale der Entfernungsmessvorrichtung 34.

Die Steuerung des ersten Beleuchtungslasers 14 erfolgt dabei so, dass sich ein möglichst kleiner NOHD Wert einstellt. Für die Berechnung der Beleuchtungslaserparameter, die zu möglichst kleinen aber noch ausreichend großen Leistungen der Beleuchtungslaserstrahlung 22 führen, müssen bei gepulst betriebenen Beleuchtungslasern 14 unter anderem zwei Expositionsgrenzwerte berücksichtigt werden, nämlich ein Spitzenwert EGW_Spitze (W/m²) für den jeweils einzelnen Beleuchtungslaserstrahlungspuls und ein mittlerer Wert EGW _Mittel (W/m²) für die mittlere Leistung einer Folge von Beleuchtungslaserstrahlungspulsen. Im Allgemeinen ist der Spitzenwert EGW_Spitze für einen Beleuchtungslaserstrahlungspuls deutlich größer als der mittlere Wert EGW_Mittel. Dies führt zu einem niedrigen NOHD_Spitze Wert für niedrige Pulswiederholungsfrequenzen.

Bei der Berechnung von NOHD werden über die Werte EGW_Spitze und EGW_Mittel hinaus weitere Parameter berücksichtigt, von denen im Folgenden einige ohne Anspruch auf Vollständigkeit aufgelistet sind:

| | |
|---|---|
| Pulsspitzenleistung | P_Spitze |
| Mittlere Leistung | P_Mittel = E_Puls * f_rep |
| Repetitionsrate | f_rep (Zahl der Pulse pro Zeiteinheit) |
| Pulsenergie | E_Puls (J) |
| Divergenz (Strahlungsöffnungswinkel) | (rad) |
| Intensität Puls I_Spitze | (W/m²) |
| Intensität Puls I_Mittel | (W/m²) |
| Wellenlänge | Lambda (m) |

Für das aktive Beobachten von Objekten und für das Feintracking werden vergleichsweise große Raumbereiche großflächig mit Beleuchtungslaserstrahlung 22 beleuchtet. Größere Raumbereiche sind dabei zum Beispiel solche, die von der Apertur des Beleuchtungslasers aus betrachtet unter einem Sichtwinkel von bspw. 2 mrad bis 4 mrad erscheinen. Vom Ziel 38 oder einem anderen Objekt reflektierte Beleuchtungslaserstrahlung 42 wird vom Wirklaserteleskop 26 erfasst und durch den optischen Sensor 30, der bevorzugt eine Kamera ist, in elektrische Signale umgewandelt, die dann von der Auswertungssoftware 44 des Steuergerätes 32 ausgewertet werden. Insgesamt ist die Laserstrahlungsvorrichtung 10 dazu eingerichtet, ein erfindungsgemäßes Verfahren durchzuführen, bzw. seinen Ablauf zu steuern. Das Einrichten erfolgt insbesondere durch eine entsprechende Programmierung des Steuergeräts 32.

Abweichend von der Darstellung der Figur 1 kann der Beleuchtungslaser auch in einem vom Gehäuse 12 des Wirklasers 13 separaten weiteren Gehäuse angeordnet sein. Das Steuergerät 32 befindet sich dann zu Beispiel in einem der beiden Gehäuse.

In einer weiteren Ausgestaltung beherbergt das Gehäuse 12 insbesondere das Wirklaserteleskop, und der Wirklaser 13 ist außerhalb des Gehäuses 12 des Wirklaserteleskops angeordnet. Die Wirklaserstrahlung wird dann bevorzugt mit wenigstens einer optischen Faser in das Gehäuse 12 geführt. Alternativ oder ergänzend wird Beleuchtungslaserstrahlung mit einer oder mehreren optischen Fasern in das Gehäuse 12 geführt. Bevorzugt ist auch, dass die Beleuchtungslaserstrahlung und die Wirklaserstrahlung mit einem optischen Koppler vereinigt werden und beide durch das Wirklaserteleskop hindurch propagieren und durch dieselbe Apertur abgestrahlt werden.

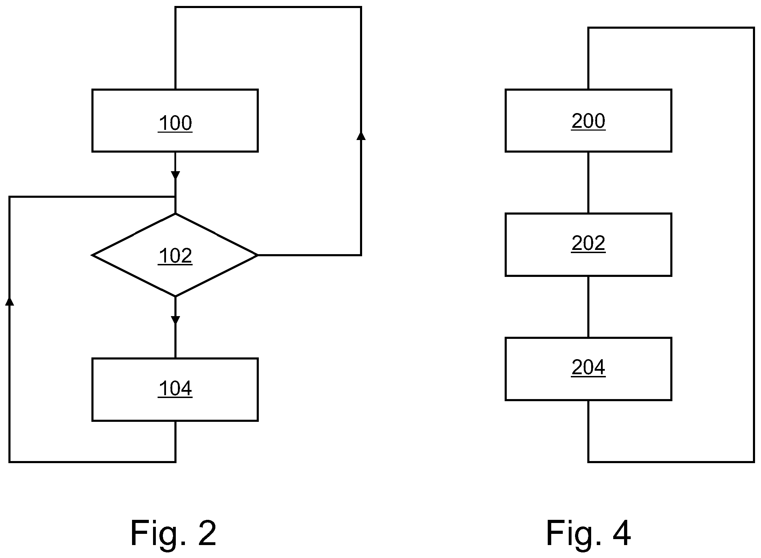

Figur 2 zeigt ein Ausführungsbeispiel des ersten erfindungsgemäßen Verfahrens, mit dem der Beleuchtungslaser betrieben wird.

In diesem Ausführungsbeispiel, das sich auf eine Laserstrahlungsvorrichtung 10 bezieht, die wenigstens einen Beleuchtungslaser 14 und einen Wirklaser 13 aufweist, wird der Beleuchtungslaser 14 in zwei voneinander verschiedenen Betriebsmodi betrieben. Dabei wird der Beleuchtungslaser 14 in einem ersten Schritt 100 in einem ersten Betriebsmodus der Laserstrahlungsvorrichtung 10 betrieben. Der erste Betriebsmodus zeichnet sich dadurch aus, dass der Wirklaser 13 keine Wirklaserstrahlung abstrahlt. Dabei erfolgt der Betrieb mit Parametern des Beleuchtungslasers 14, bei denen sich ein möglichst geringer NOHD Wert bei gleichzeitig noch für die Beleuchtungszwecke ausreichender Leistung der Beleuchtungslaserstrahlung 22 ergibt.

In einem zweiten Schritt 102 wird überprüft, ob Wirklaserstrahlung 20 emittiert werden soll. Wenn dies nicht der Fall ist, kehrt das Verfahren in den ersten Schritt 100 zurück. Wenn dies dagegen der Fall ist, wird der Beleuchtungslaser 14 in einem dritten Schritt in dem zweiten Betriebsmodus der Laserstrahlungsvorrichtung 10 betrieben. In dem zweiten Betriebsmodus wird auch Wirklaserstrahlung 20 emittiert. Die mit der Wirklaserstrahlung 20 emittierte Strahlungsleistung ist in der Regel so groß, dass sie die Expositionsgrenzwerte deutlich überschreitet. In diesem Fall kommt es also nicht mehr auf die Einhaltung von Expositionsgrenzwerten durch den Beleuchtungslaser 14 an. Daher wird der Beleuchtungslaser 14 in dem dritten Schritt und damit in dem zweiten Betriebsmodus, so betrieben, dass seine Beleuchtungslaserstrahlung 22 eine zweite Beleuchtungslaserstrahlungsleistung aufweist, die größer ist als die erste Beleuchtungslaserstrahlungsleistung. Mit der größeren Beleuchtungslaserstrahlungsleistung verbessert sich das Signal-Rausch-Verhältnis der am Objekt reflektierten Beleuchtungslaserstrahlung 42, was das Feintracking verbessert.

Die in den beiden Betriebsmodi unterschiedlich großen Beleuchtungslaserstrahlungsleistungen werden bevorzugt dadurch verwirklicht, dass der Beleuchtungslaser 14 in dem ersten Betriebsmodus und in dem zweiten Betriebsmodus Beleuchtungslaserstrahlung 22 in Form von Beleuchtungslaserstrahlungspulsen emittiert, wobei eine Repetitionsfrequenz, mit der die Beleuchtungslaserstrahlungspulse emittiert werden, in der ersten Betriebsart kleiner ist als in der zweiten Betriebsart. Die Leistung der einzelnen Beleuchtungslaserstrahlungspulse bleibt dabei konstant. Alternativ kann auch die Repetitionsfrequenz beibehalten werden. In diesem Fall erfolgt der Betrieb des Beleuchtungslasers im ersten Betriebsmodus mit einer geringeren Einzelpulsleistung. Weiter sind auch Mischformen möglich, bei denen sich sowohl die Einzelpulsleistung als auch die Repetitionsfrequenz von Betriebsmodus zu Betriebsmodus unterscheidet. Aus dem dritten Schritt 104 kehrt das Verfahren immer wieder in den Schritt 102 zurück, sodass eine Beendigung der Emission von Wirklaserstrahlung eine Rückkehr in den ersten Betriebsmodus auslöst.

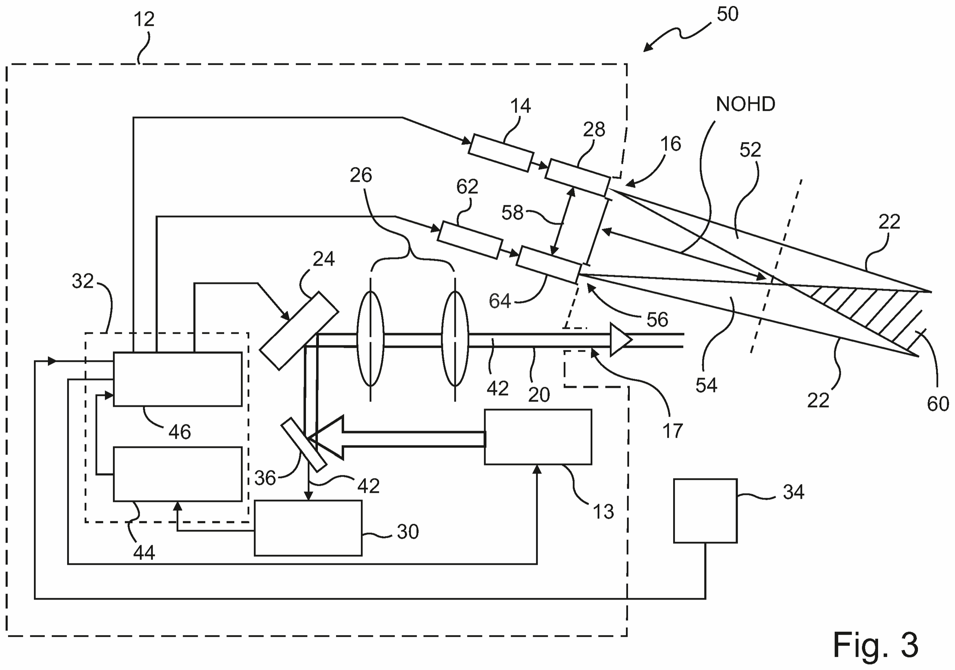

Figur 3 zeigt ein Ausführungsbeispiel einer weiteren erfindungsgemäßen Laserstrahlungsvorrichtung 50. Die Laserstrahlungsvorrichtung 50 unterscheidet sich von der Laserstrahlungsvorrichtung 10 aus der Figur 1 durch einen zusätzlichen, zweiten Beleuchtungslaserstrahlengang 54. In dem ersten Beleuchtungslaserstrahlengang 52 propagierende Beleuchtungslaserstrahlung 22 tritt aus einer ersten Beleuchtungslaserapertur 16 der Laserstrahlungsvorrichtung 50 aus, und in dem zweiten Beleuchtungslaserstrahlengang 54 propagierende Beleuchtungslaserstrahlung 22 tritt aus einer zweiten Beleuchtungslaserapertur 56 der Laserstrahlungsvorrichtung 50 aus, die von der ersten Beleuchtungslaserapertur räumlich durch einen Abstand 58 getrennt ist. Dadurch wird die Beleuchtungslaserstrahlung 22 aufgeteilt.

Der Abstand 58 der Beleuchtungslaseraperturen 16, 56 voneinander ist so gewählt, dass sich die beiden Beleuchtungslaserstrahlengänge innerhalb des durch einzuhaltende Expositionsgrenzwerte definierten augensicheren Mindestabstandes NOHD nicht überlappen. Die Überlappung der beiden Beleuchtungslaserstrahlengänge tritt erst in einem Abstand von den Aperturen auf, der größer als ein vorgegebener Mindestabstand NOHD für jeden einzelnen der beiden Beleuchtungslaserstrahlengänge 52, 54 ist. Die in den beiden Beleuchtungslaserstrahlengängen propagierenden Strahlungsleistungen addieren sich erst im Überlappungsbereich 60.

Das Ausführungsbeispiel gemäß der Figur 3 geht in seinen Vorrichtungsaspekten aus dem Gegenstand der Figur 1 durch den zusätzlichen zweiten Beleuchtungslaser 62 mit seinem zugehörigen zweiten Beleuchtungslaserteleskop 64 hervor. Im Übrigen gilt die Beschreibung der Figur 1 auch für die Figur 3.

In einer bevorzugten Ausgestaltung wird die Laserstrahlungsvorrichtung 50 so betrieben, dass die in den Beleuchtungslaserstrahlengängen propagierende Laserstrahlung in Form von Beleuchtungslaserstrahlungspulsen in die Beleuchtungslaserstrahlengänge eingespeist wird, wobei die Beleuchtungslaserstrahlungspulse von Beleuchtungslaserstrahlungspuls zu Beleuchtungslaserstrahlungspuls abwechselnd in den ersten Beleuchtungslaserstrahlengang 52 und den zweiten Beleuchtungslaserstrahlengang 54 eingespeist werden. Auf dem beleuchteten Objekt addieren sich dann die mittleren Intensitäten der einzelnen Beleuchtungslaserstrahlungen der beiden Beleuchtungslaserstrahlengänge.

Figur 4 zeigt ein Ausführungsbeispiel eines zweiten Verfahrens. Dieses Verfahren dient zum Einstellen einer Beleuchtungslaserstrahlungsleistung. Dabei wird in einem ersten Schritt 200 eine Entfernung eines durch den ersten Beleuchtungslaser 14 und/oder den zweiten Beleuchtungslaser 62 zu beleuchtenden Ziels mit einer vom Beleuchtungslaser 14 und/oder 62 verschiedenen Entfernungsmessvorrichtung 34 gemessen. Bei der Entfernungsmessvorrichtung 34 handelt es sich bevorzugt um eine Radarvorrichtung, wie sie auch für das Grobtracking verwendet wird.

In einem zweiten Schritt 202 wird eine Beleuchtungslaserstrahlungsleistung des Beleuchtungslasers 14 und/oder 62 in Abhängigkeit von der gemessenen Entfernung bestimmt. Anschließend wird das Ziel in einem dritten Schritt 204 durch den Beleuchtungslaser 14 und/oder 62 beleuchtet, wobei der Beleuchtungslaser 14 und/oder 62 so betrieben wird, dass er die bestimmte Beleuchtungslaserstrahlungsleistung emittiert. Danach kehrt das Verfahren in seinen ersten Schritt 200 zurück. Die Schleife aus diesen drei Schritten wird fortlaufend wiederholt durchlaufen, so dass die Beleuchtungslaserstrahlungsleistung fortlaufend an sich ändernde Entfernungen des Ziels 38 angepasst wird. Dabei wird die Beleuchtungslaserstrahlungsleistung so bestimmt, dass sie mit abnehmender Entfernung ebenfalls abnimmt. Die Beleuchtungslaserstrahlungsleistung wird insbesondere jeweils so bestimmt, dass sich ein möglichst kleiner NOHD Wert bei noch ausreichender Intensität der das Ziel 38 beleuchtenden Beleuchtungslaserstrahlung ergibt.

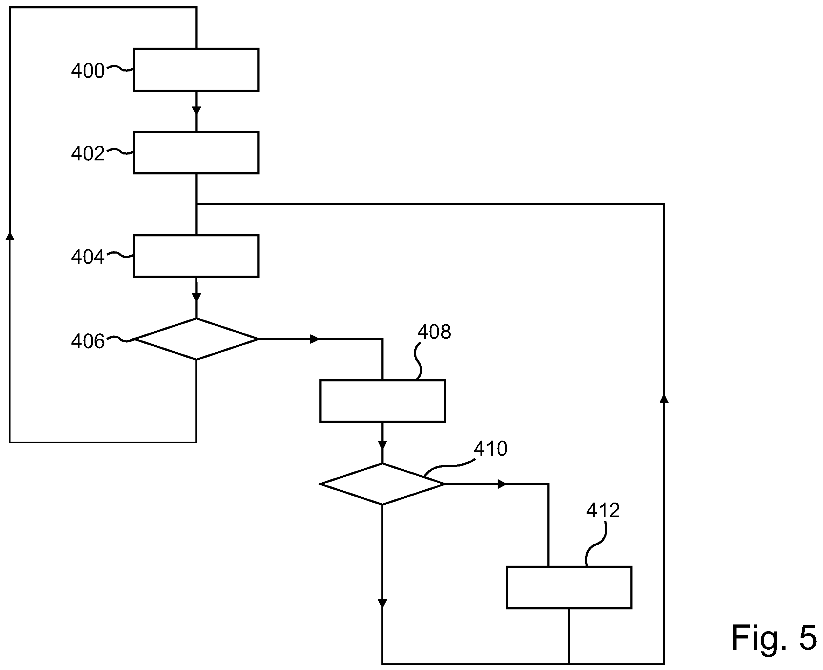

Figur 5 zeigt ein Flussdiagramm als Ausführungsbeispiel des dritten Verfahrens zum Einstellen von Parametern eines Beleuchtungslasers. In einem ersten Schritt 400 wird überprüft, ob ein Ziel 38 beobachtet werden soll. Wenn kein Ziel beobachtet werden soll, wird die Überprüfung von Zeit zu Zeit wiederholt, ohne dass weitere Schritte der hier beschriebenen Verfahren ausgeführt werden. Soll dagegen ein Ziel beobachtet werden, wird in dem ersten Schritt 400 eine Entfernung eines durch den Beleuchtungslaser 14 und/oder 62 zu beleuchtenden Ziels 38 zu dem Beleuchtungslaser 14 und/oder 62 gemessen.

Die Messung erfolgt bevorzugt mit einer vom Beleuchtungslaser 14 und 62 verschiedenen Entfernungsmessvorrichtung 34**.** Dabei handelt es sich zum Beispiel um eine Radarvorrichtung.

In einem zweiten Schritt 402 werden Parameter des Beleuchtungslasers 14 und/oder 62 in Abhängigkeit von der gemessenen Entfernung bestimmt.

In einem dritten Schritt 404 wird wenigstens ein auf das Ziel 38 gerichteter Beleuchtungslaserstrahlungspuls des mit den bestimmten Parametern betriebenen Beleuchtungslasers 14 und/oder 62 emittiert. Aufgrund der Parameter des Beleuchtungslasers 14 und der ersten Apertur 16 kann der NOHD Wert für diesen Beleuchtungslaserstrahlungspuls mit Pulsenergie E_Puls, bzw. E_0 bestimmt werden.

In einem vierten Schritt 406 erfolgt eine Prüfung darauf, ob Laserstrahlung des ausgesendeten Laserstrahlungspulses zu dem optischen Sensor 30 oder einem anderen Detektor des Beleuchtungslasers 14 und/oder 62 reflektiert wird.

Wenn das der Fall ist, wird in einem fünften Schritt 408 die Entfernung des Objektes, das den Laserpuls reflektiert hat, in Abhängigkeit von der reflektierten und detektierten Beleuchtungslaserstrahlung 42 ermittelt. Alternativ oder ergänzend wird der Reflex mit einem ggf. als Kamera ausgeführtem optischen Sensor 30 daraufhin überprüft, ob er ein menschliches Gesicht abbildet.

In einem sechsten Schritt 410 wird die Entfernung des Objektes von dem Beleuchtungslaser 14 und/oder 62 mit der Entfernung des Ziels 38 von dem Beleuchtungslaser 14 und/oder 62 verglichen. Dann, wenn die Entfernung des Objektes kleiner ist als die Entfernung des Ziels, werden die Parameter des Beleuchtungslasers 14 und/oder 62 in einem siebten Schritt 412 so verändert, dass ein Expositionsgrenzwert EGW am Ort des Objektes durch die dort auftreffende Laserstrahlung des Beleuchtungslasers 14 und/oder 62 nicht überschritten wird. Das Gleiche gilt für den Fall, in dem der Reflex ein menschliches Gesicht abbildet. Der Reflex mit dem geringsten Abstand definiert den zulässigen Wert für den NOHD für die mittlere Leistung P_Mittel.

Die Veränderung erfolgt in einer Ausgestaltung dadurch, dass eine mittlere Intensität der Laserstrahlung des Beleuchtungslasers verändert wird.

Das kann zum Beispiel dadurch erreicht werden, dass die am Ort des Objektes auftreffende Laserstrahlung durch Reduzierung einer Repetitionsrate des Beleuchtungslasers verändert wird.

Bei gegebener Pulsenergie kann nun die maximal zulässige Repetitionsrate für den Beleuchtungslaser gemäß der "technischen Regeln zur Arbeitsschutzverordnung zu künstlicher optischer Strahlung (TROS Laserstrahlung)" ermittelt werden (P_Mittel = E_Puls * f_rep. Anschließend kehrt das Verfahren zum dritten Schritt 404 zurück.

Wird im sechsten Schritt 410 dagegen festgestellt, dass sich kein Objekt näher am Beleuchtungslaser 14 und/oder 62 befindet als das Ziel 38, kehrt das Verfahren ohne Veränderung der Beleuchtungslaserparameter vor den dritten Schritt 404 zurück.

Wenn im vierten Schritt 406 kein Reflex und damit kein Ziel detektiert wird, kehrt das Verfahren vor den ersten Schritt 400 zurück, in dem überprüft wird, ob ein Ziel 38 beobachtet werden soll.

## Patentansprüche

1. Verfahren zum Betreiben einer Laserstrahlungsvorrichtung (10), die einen Beleuchtungslaser (14) und einen Wirklaser (13) aufweist und wobei der Beleuchtungslaser (14) in einem ersten Betriebsmodus der Laserstrahlungsvorrichtung (10), in dem der Wirklaser (13) keine Wirklaserstrahlung (20) abstrahlt, so betrieben wird, dass seine Beleuchtungslaserstrahlung (22) eine erste Beleuchtungslaserstrahlungsleistung aufweist, **dadurch gekennzeichnet, dass** der Beleuchtungslaser (14) in einem zweiten Betriebsmodus der Laserstrahlungsvorrichtung (10), in dem der Wirklaser (13) Wirklaserstrahlung (20) emittiert, so betrieben wird, dass seine Beleuchtungslaserstrahlung (22) eine zweite Beleuchtungslaserstrahlungsleistung aufweist, die größer ist als die erste Beleuchtungslaserstrahlungsleistung.

2. Verfahren nach Anspruch 1, wobei der Beleuchtungslaser (14) in dem ersten Betriebsmodus und in dem zweiten Betriebsmodus so betrieben wird, dass er die Beleuchtungslaserstrahlung (22) in Form von Beleuchtungslaserstrahlungspulsen emittiert, wobei eine Repetitionsfrequenz, mit der die Beleuchtungslaserstrahlungspulse emittiert werden, in der ersten Betriebsart kleiner ist als in der zweiten Betriebsart.

3. Verfahren nach einem der Ansprüche 1 oder 2, wobei die Laserstrahlungsvorrichtung (50) einen ersten Beleuchtungslaserstrahlengang (52) und einen zweiten Beleuchtungslaserstrahlengang (54) umfasst, wobei die Laserstrahlungsvorrichtung (50) derart betrieben wird, dass in dem ersten Beleuchtungslaserstrahlengang (52) propagierende Laserstrahlung (22) aus einer ersten Apertur (16) der Laserstrahlungsvorrichtung (50) austritt und in dem zweiten Beleuchtungslaserstrahlengang (54) propagierende Laserstrahlung (22) aus einer zweiten Apertur (56) der Laserstrahlungsvorrichtung (50) austritt, die von der ersten Apertur (16) räumlich getrennt ist, und wobei sich die Beleuchtungslaserstrahlengänge (52, 54) überlappen, wobei eine Überlappung der beiden Beleuchtungslaserstrahlengänge (52, 54) erst in einem Abstand von den Aperturen (16, 56) auftritt, der größer als ein vorgegebener Mindestabstand für jeden einzelnen der beiden Strahlengänge (52, 54) ist.

4. Verfahren nach Anspruch 3, wobei die Laserstrahlungsvorrichtung (50) so betrieben wird, dass die in den Beleuchtungslaserstrahlengängen (52, 54) propagierende Laserstrahlung (22) in Form von Beleuchtungslaserstrahlungspulsen in die Beleuchtungslaserstrahlengänge (52, 54) eingespeist wird, wobei die Beleuchtungslaserstrahlungspulse von Beleuchtungslaserstrahlungspuls zu Beleuchtungslaserstrahlungspuls abwechselnd in den ersten Beleuchtungslaserstrahlengang (52) und den zweiten Beleuchtungslaserstrahlengang (54) eingespeist wird.

5. Laserstrahlungsvorrichtung (10), die einen Beleuchtungslaser (14) und einen Wirklaser (13) aufweist und wobei der Beleuchtungslaser (14) in einem ersten Betriebsmodus der Laserstrahlungsvorrichtung (10), in dem der Wirklaser (13) keine Wirklaserstrahlung (20) abstrahlt, derart betreibbar ist, dass seine Beleuchtungslaserstrahlung (22) eine erste Beleuchtungslaserstrahlungsleistung aufweist, **dadurch gekennzeichnet, dass** der Beleuchtungslaser (14) in einem zweiten Betriebsmodus der Laserstrahlungsvorrichtung (10), in dem der Wirklaser (13) Wirklaserstrahlung (20) emittiert, derart betreibbar ist, dass seine Beleuchtungslaserstrahlung (22) eine zweite Beleuchtungslaserstrahlungsleistung aufweist, die größer ist als die erste Beleuchtungslaserstrahlungsleistung.

6. Laserstrahlungsvorrichtung (10) nach Anspruch 5, wobei der Beleuchtungslaser (14) in dem ersten Betriebsmodus und in dem zweiten Betriebsmodus derart betreibbar ist, dass der Beleuchtungslaser (14) die Beleuchtungslaserstrahlung (22) in Form von Beleuchtungslaserstrahlungspulsen emittiert, wobei eine Repetitionsfrequenz, mit der die Beleuchtungslaserstrahlungspulse emittiert werden, in der ersten Betriebsart kleiner ist als in der zweiten Betriebsart.

7. Laserstrahlungsvorrichtung (50) nach einem der Ansprüche 5 oder 6, wobei die Laserstrahlungsvorrichtung (50) einen ersten Beleuchtungslaserstrahlengang (52) und einen zweiten Beleuchtungslaserstrahlengang (54) umfasst, wobei in dem ersten Beleuchtungslaserstrahlengang (52) propagierende Laserstrahlung (22) aus einer ersten Apertur (16) der Laserstrahlungsvorrichtung (50) austritt und in dem zweiten Beleuchtungslaserstrahlengang (54) propagierende Laserstrahlung (22) aus einer zweiten Apertur (56) der Laserstrahlungsvorrichtung (50) austritt, die von der ersten Apertur (16) räumlich getrennt ist, und wobei sich die Beleuchtungslaserstrahlengänge (52, 54) überlappen, wobei eine Überlappung der beiden Beleuchtungslaserstrahlengänge (52, 54) erst in einem Abstand von den Aperturen (16, 56) auftritt, der größer als ein vorgegebener Mindestabstand für jeden einzelnen der beiden Strahlengänge (52, 54) ist.

8. Laserstrahlungsvorrichtung (50) nach Anspruch 7, wobei die Laserstrahlungsvorrichtung (50) so betrieben wird, dass die in den Beleuchtungslaserstrahlengängen (52, 54) propagierende Laserstrahlung (22) in Form von Beleuchtungslaserstrahlungspulsen in die Beleuchtungslaserstrahlengänge (52, 54) eingespeist wird, wobei die Beleuchtungslaserstrahlungspulse von Beleuchtungslaserstrahlungspuls zu Beleuchtungslaserstrahlungspuls abwechselnd in den ersten Beleuchtungslaserstrahlengang (52) und den zweiten Beleuchtungslaserstrahlengang (54) eingespeist wird.

## Claims

1. A method for operating a laser radiation device (10) that has an illumination laser (14) and an active laser (13), and wherein, in a first operating mode of the laser radiation device (10) in which the active laser (13) does not emit any active laser radiation (20), the illumination laser (14) is operated such that its illumination laser radiation (22) has a first illumination laser radiant flux, **characterized in that**, in a second operating mode of the laser radiation device (10) in which the active laser (13) emits active laser radiation (20), the illumination laser (14) is operated such that its illumination laser radiation (22) has a second illumination laser radiant flux that is greater than the first illumination laser radiant flux.

2. The method according to claim 1, wherein the illumination laser (14) is operated in the first operating mode and in the second operating mode such that it emits the illumination laser radiation (22) in the form of illumination laser radiation pulses, wherein a repetition frequency with which the illumination laser radiation pulses are emitted is less in the first operating mode than in the second operating mode.

3. The method according to any one of claims 1 or 2, wherein the laser radiation device (50) comprises a first illumination laser beam path (52) and a second illumination laser beam path (54), wherein the laser radiation device (50) is operated such that laser radiation (22) propagating in the first illumination laser beam path (52) exits from a first aperture (16) of the laser radiation device (50) and laser radiation (22) propagating in the second illumination laser beam path (54) exits from a second aperture (56) of the laser radiation device (50), which is spatially separated from the first aperture (16), and wherein the illumination laser beam paths (52, 54) overlap, wherein an overlap of the two illumination laser beam paths (52, 54) occurs only at a distance from the apertures (16, 56) that is greater than a predetermined minimum distance for each individual one of the two beam paths (52, 54).

4. The method according to claim 3, wherein the laser radiation device (50) is operated such that the laser radiation (22) propagating in the illumination laser beam paths (52, 54) is coupled into the illumination laser beam paths (52, 54) in the form of illumination laser radiation pulses, wherein the illumination laser radiation pulses are alternately coupled into the first illumination laser beam path (52) and into the second illumination laser beam path (54) from illumination laser radiation pulse to illumination laser radiation pulse.

5. A laser radiation device (10) comprising an illumination laser (14) and an active laser (13), wherein, in a first operating mode of the laser radiation device (10) in which the active laser (13) does not emit any active laser radiation (20), the illumination laser (14) is operable such that its illumination laser radiation (22) has a first illumination laser radiant flux, **characterized in that** in a second operating mode of the laser radiation device (10) in which the active laser (13) emits active laser radiation (20), the illumination laser (14) is operable such that its illumination laser radiation (22) has a second illumination laser radiant flux that is greater than the first illumination laser radiant flux.

6. The laser radiation device (10) according to claim 5, wherein the illumination laser (14) is operable in the first operating mode and in the second operating mode such that it emits the illumination laser radiation (22) in the form of illumination laser radiation pulses, wherein a repetition frequency with which the illumination laser radiation pulses are emitted is lower in the first operating mode than in the second operating mode.

7. The laser radiation device (50) according to claim 5 or 6, wherein the laser radiation device (50) comprises a first illumination laser beam path (52) and a second illumination laser beam path (54), wherein laser radiation (22) propagating in the first illumination laser beam path (52) exits from a first aperture (16) of the laser radiation device (50) and laser radiation (22) propagating in the second illumination laser beam path (54) exits from a second aperture (56) of the laser radiation device (50) that is spatially separated from the first aperture (16), and wherein the illumination laser beam paths (52, 54) overlap, wherein an overlap of the two illumination laser beam paths (52, 54) occurs only at a distance from the apertures (16, 56) that is greater than a predetermined minimum distance for each individual one of the two beam paths (52, 54).

8. The laser radiation device (50) according to claim 7, wherein the laser radiation device (50) is operated such that the laser radiation (22) propagating in the illumination laser beam paths (52, 54) is fed into the illumination laser beam paths (52, 54) in the form of illumination laser radiation pulses, wherein the illumination laser radiation pulses are fed alternately into the first illumination laser beam path (52) and the second illumination laser beam path (54) from one illumination laser radiation pulse to the next illumination laser radiation pulse.

## Revendications

1. Procédé destiné à faire fonctionnement un dispositif de rayonnement laser (10) qui comprend un laser d'illumination (14) et un laser actif (13) et dans lequel on fait fonctionner le laser d'illumination (14) dans un premier mode de fonctionnement du dispositif de rayonnement laser (10), dans lequel le laser actif (13) n'émet pas de rayonnement laser actif (20), de telle sorte que son rayonnement laser d'illumination (22) présente une première puissance de rayonnement laser d'illumination, **caractérisé en ce qu'**on fait fonctionner le laser d'illumination (14) dans un deuxième mode de fonctionnement du dispositif de rayonnement laser (10), dans lequel le laser actif (13) émet du rayonnement laser actif (20), de telle sorte que son rayonnement laser d'illumination (22) présente une deuxième puissance de rayonnement laser d'illumination qui est supérieure à la première puissance de rayonnement laser d'illumination.

2. Procédé selon la revendication 1, dans lequel on fait fonctionner le laser d'illumination (14) dans le premier mode de fonctionnement et dans le deuxième mode de fonctionnement de telle sorte qu'il émette le rayonnement laser d'illumination (22) sous forme d'impulsions de rayonnement laser d'illumination, dans lequel une fréquence de répétition à laquelle les impulsions de rayonnement laser d'illumination sont émises est inférieure dans le premier mode de fonctionnement que dans le deuxième mode de fonctionnement.

3. Procédé selon l'une quelconque des revendications 1 ou 2, dans lequel le dispositif de rayonnement laser (50) comprend un premier trajet de faisceau laser d'illumination (52) et un deuxième trajet de faisceau laser d'illumination (54), dans lequel on fait fonctionner le dispositif de rayonnement laser (50) de telle sorte qu'un rayonnement laser (22) se propageant dans le premier trajet de faisceau laser d'illumination (52) sort d'une première ouverture (16) du dispositif de rayonnement laser (50) et qu'un rayonnement laser (22) se propageant dans le deuxième trajet de faisceau laser d'illumination (54) sort d'une deuxième ouverture (16) du dispositif de rayonnement laser (50) qui est spatialement séparée de la première ouverture (16), et dans lequel les trajets de faisceau laser d'illumination (52, 54) se chevauchant, dans lequel un chevauchement des deux trajets de faisceau laser d'illumination (52, 54) n'a lieu qu'à une distance des ouvertures (16, 56) qui est supérieure à une distance minimale prédéterminée pour chacun des deux trajets de faisceau (52, 54).

4. Procédé selon la revendication 3, dans lequel on fait fonctionner le dispositif de rayonnement laser (50) de telle sorte que le rayonnement laser (22) se propageant dans les trajets de faisceau laser d'illumination (52, 54) soit injecté dans les trajets de faisceau laser d'illumination sous forme d'impulsions de rayonnement laser d'illumination, dans lequel les impulsions de rayonnement laser d'illumination sont injectées, d'une impulsion de rayonnement laser d'illumination à l'autre, alternativement dans le premier trajet de faisceau laser d'illumination (52) et le deuxième trajet de faisceau laser d'illumination (54).

5. Dispositif de rayonnement laser (10) qui comprend un laser d'illumination (14) et un laser actif (13) et dans lequel on peut faire fonctionner le laser d'illumination (14) dans un premier mode de fonctionnement du dispositif de rayonnement laser (10), dans lequel le laser actif (13) n'émet pas de rayonnement laser actif (20), de telle sorte que son rayonnement laser d'illumination (22) présente une première puissance de rayonnement laser d'illumination, **caractérisé en ce qu'**on peut faire fonctionner le laser d'illumination (14) dans un deuxième mode de fonctionnement du dispositif de rayonnement laser (10), dans lequel le laser actif (13) émet du rayonnement laser actif (20), de telle sorte que son rayonnement laser d'illumination (22) présente une deuxième puissance de rayonnement laser d'illumination qui est supérieure à la première puissance de rayonnement laser d'illumination.

6. Dispositif de rayonnement laser (10) selon la revendication 5, dans lequel on peut faire fonctionner le laser d'illumination (14) dans le premier mode de fonctionnement et dans le deuxième mode de fonctionnement de telle sorte que le laser d'illumination (14) émette le rayonnement laser d'illumination (22) sous forme d'impulsions de rayonnement laser d'illumination, dans lequel une fréquence de répétition à laquelle les impulsions de rayonnement laser d'illumination sont émises est inférieure dans le premier mode de fonctionnement que dans le deuxième mode de fonctionnement.

7. Dispositif de rayonnement laser (50) selon l'une quelconque des revendications 5 ou 6, dans lequel le dispositif de rayonnement laser (50) comprend un premier trajet de faisceau laser d'illumination (52) et un deuxième trajet de faisceau laser d'illumination (54), dans lequel un rayonnement laser (22) se propageant dans le premier trajet de faisceau laser d'illumination (52) sort d'une première ouverture (16) du dispositif de rayonnement laser (50) et un rayonnement laser (22) se propageant dans le deuxième trajet de faisceau laser d'illumination (54) sort d'une deuxième ouverture (16) du dispositif de rayonnement laser (50) qui est spatialement séparée de la première ouverture (16), et dans lequel les trajets de faisceau laser d'illumination (52, 54) se chevauchant, dans lequel un chevauchement des deux trajets de faisceau laser d'illumination (52, 54) n'a lieu qu'à une distance des ouvertures (16, 56) qui est supérieure à une distance minimale prédéterminée pour chacun des deux trajets de faisceau (52, 54).

8. Dispositif de rayonnement laser (50) selon la revendication 7, dans lequel on fait fonctionner le dispositif de rayonnement laser (50) de telle sorte que le rayonnement laser (22) se propageant dans les trajets de faisceau laser d'illumination (52, 54) soit injecté dans les trajets de faisceau laser d'illumination (52, 54) sous forme d'impulsions de rayonnement laser d'illumination, dans lequel les impulsions de rayonnement laser d'illumination sont injectées, d'une impulsion de rayonnement laser d'illumination à l'autre, alternativement dans le premier trajet de faisceau laser d'illumination (52) et le deuxième trajet de faisceau laser d'illumination (54).
